Europäisches Patentamt

European Patent Office

Office européen des brevets

(11) Publication number: **0 290 185**
**A2**

# EUROPEAN PATENT APPLICATION

(21) Application number: **88303766.5**

(22) Date of filing: **27.04.88**

(51) Int. Cl.⁴: **B62B 13/04**

(30) Priority: **30.04.87 CA 536125**

(43) Date of publication of application:
**09.11.88 Bulletin 88/45**

(84) Designated Contracting States:
**AT BE CH DE ES FR GB GR IT LI LU NL SE**

(71) Applicant: **Velman, Boris Aronovich**
**197 Borrows Street**
**Thornhill Ontario L4J 2W5(CA)**

(72) Inventor: **Velman, Boris Aronovich**
**197 Borrows Street**
**Thornhill Ontario L4J 2W5(CA)**

(74) Representative: **Brown, David Alan et al**
**MATHYS & SQUIRE 10 Fleet Street**
**London EC4Y 1AY(GB)**

(54) **Recreational vehicle.**

㊗ A recreational vehicle for use upon grass or snow-covered terrain has a fixed gliding mechanism, such as a ski (20); a seating device for an operator, such as a moulded seat or seats (50, 60), the seating device being interconnected with the fixed gliding mechanism, preferably through a tubular frame (30); a handle (80) fixed to the seating device or the interconnecting mechanism; and a driving mechanism (40) driving a ground-engaging driven mechanism, such as a wheel (70) or continuous track (70a). The vehicle can be steered or stopped by the operator shifting his weight to one side or the other of the vehicle by leaning in that direction. The driving mechanism (40) may be a powered device such as an internal combustion engine or electric motor, or operator-powered such as a pedal mechanism. The driven wheel (70) or track (70a) may be connected to the tubular frame (30) through a shock-absorber (71 or 71a).

FIG.1.

## FIELD OF THE INVENTION

This invention relates to a recreational vehicle for use on both grass and snow covered terrain.

## BACKGROUND OF THE INVENTION

As observed from a review of the prior art searched, a host of vehicles exist for traversing snow or grass covered terrain. The large majority of these devices incorporate a forwardly positioned steering column to allow for turning of these vehicles. However, turning of the vehicles in this manner causes the edges of the forward steering apparatus (for example a ski) to frictionally engage the terrain being traversed causing unnecessary braking of the vehicle and potentially, in the extreme case, flipping or upsetting of the vehicle, as the direction of extension of the forward steering apparatus when turned (for example a ski) is not colinear with direction of travel for the vehicle. Examples of such a device may be found in U.S. patent 3,610,356 by Byar, U.S. patent 3,814,198 by Seiler, U.S. patent 3,650,342 by Pushnig, Canadian Letters patent 991,684 by Hoareau, U.S. patent 4,307,788 by Shelton, U.S. patent 4,146,101 by Plourde, and U.S. patent 4,613,006 by Moss. (Article enclosed from Toronto Star published in January of 1987).

In an attempt to overcome the limitations of the prior art and improve the control of such devices, I had obtained U.S. patent 4,440,408 and Canadian Industrial Design Registration 49,157 which describes a recreational vehicle for use on ski type slopes for descending purposes only having greater turning safety and control. The steering thereof is accomplished by shifting the weight of the user in the direction of a turn. By extending the turn the entire unit may be stopped in a manner similar to that of a figure skater.

However, it has been found in practice that the user may not have accessible slopes in his/her area lessening the enjoyment of my patented device. Further, ski resort operators are limited by local bylaws in allowing other devices on ski slopes while skiers are present. It is therefore evident to overcome the disadvantages mentioned that a device must go beyond any of the prior art cited.

It is therefore an object of the present invention to overcome the limitations of the prior art and provide a recreational vehicle which can be used anywhere by anyone without the need of a special resort built around a descending slope.

It is a further object of the invention to provide a recreational vehicle which can be readily controlled by the user.

It is a further object of the invention to provide an economical structure of a powered recreational vehicle.

Further and other objects of the invention will become apparent to a man skilled in the art when considering the following summary of the invention and the more detailed description of the preferred embodiments illustrated herein.

## SUMMARY OF THE INVENTION

According to one aspect of the invention a recreational vehicle having a bottom for use upon grass or snow covered terrain is provided, the vehicle comprising, fixed means located upon the bottom of the vehicle for gliding across terrain (preferably the fixed gliding means being a ski); means for seating an operator upon the fixed gliding means (preferably at least one moulded seat); means for interconnecting the operator seating means with the fixed gliding means, (preferably a tubular frame); handle means extending from the operator seating means or the interconnecting means, (preferably the handle means being adjustable in position horizontally and vertically); driving means fastened to the recreational vehicle, preferably connected to the interconnecting means between the seating means and the fixed gliding means (preferably a powered driving means); driven means in communication with and driven by the driving means for initial engagement with the traversed terrain, the driven means being suitably fastened to the body of the recreational vehicle and preferably to either the interconnecting means or the fixed gliding means, (preferably either a wheel or a continuous track); whereby the vehicle is steerable and stoppable by the lateral shifting of the weight of the operator to one side of the vehicle by leaning in that direction.

According to another aspect of the invention the recreational vehicle may comprise a continuous belt mounted on the underside of the fixed gliding means, the endless belt having a plurality of rollers mounted thereon and adapted to engage and roll on the ground.

According to another aspect of the invention the recreational vehicle may comprise support struts forwardly and rearwardly acting as both shock absorbers and tensioning devices which in combination with the weight of the operator and vehicle ensure traction between the driven means and the terrain.

According to another aspect of the invention the recreational vehicle may comprise gliding means having remotably actuatable pivotable plates extending from the end of the fixed gliding means proximate the driven means, the plates being pivotable downwardly away from the fixed gliding means to provide braking action between the vehicle and the terrain being traversed.

According to another aspect of the invention the recreational vehicle may comprise fixed gliding means comprising a ski being longitudinally bowed in construction away from the traversed terrain whereby in use the weight of the vehicle and the operator are more uniformly distributed over the entire length of the ski.

According to yet another aspect of the invention the recreational vehicle may comprise driven means whereby the driven means is a tire having chains about its perimeter for improved traction thereof.

According to yet another aspect of the invention the recreational vehicle may comprise driven means whereby the driven means is a continuous belt fastened to the end of the fixed gliding means proximate the driven means and vertically pivotable thereat.

According to yet another aspect of the invention the recreational vehicle may comprise driving means whereby the driving means is a gasoline motor.

According to yet another aspect of the invention the recreational vehicle may comprise fixed gliding means whereby the fixed gliding means is a ski and has fastened thereto remote the driven means a frame extending laterally away from the fixed gliding means on both sides thereof, the frame having fastened at the extremes thereof at least one continuous belt, at least one on each side in communication with the terrain for assistance in steering and braking the vehicle over grass covered terrain; the frame comprising plates extending horizontally above the continuous belt and defining a channel in which the continuous belt may travel, the plates being deflectable downwardly upon pressure of an operator's foot thereby interfering with the rotation of the continuous belt and slowing or stopping the selected belt.

According to yet another aspect of the invention the recreational vehicle may comprise fixed gliding means, the fixed gliding means being a ski preferably of extended width having sharp edges, the ski having an arcuate bottom along the entire length of the ski separating its edges, the sharp edges providing enhanced control of the vehicle.

According to yet another aspect of the invention the recreational vehicle may comprise driving means located substantially below the operator seating means.

According to yet another aspect of the invention the recreational vehicle may comprise fixed gliding means, the fixed gliding means being a ski preferably of extended width, the ski substantially extending the full length of the vehicle and having an opening therethrough through which the driven means may extend to contact the terrain being traversed.

## BRIEF DESCRIPTION OF THE DRAWINGS

Figure 1 is a perspective view of the recreational vehicle of the instant invention in a preferred embodiment of the invention.

Figure 2 is a side view of the recreational vehicle of Figure 1 illustrated in use by an operator and showing the inter-relationship and positioning of the components thereof in a preferred embodiment of the invention.

Figure 3 is a side view of the recreational vehicle of Figure 1 without the operator thereof illustrating in close up detail the inter-relationship of the components thereof in a preferred embodiment of the invention.

Figure 4 is a side view of an alternative embodiment of the invention illustrating the inter-relationship of the components thereof.

Figure 5 is a top view of the recreational vehicle of Figure 4 illustrating special features of the alternative embodiment of the invention.

Figure 6 is a cross-sectional view of the recreational vehicle across the line AA illustrated in Figure 5 depicting the contour of the instant invention in an alternative embodiment of the invention.

Figure 7 is a side view of the ski of Figure 4 illustrating the tapering of the ski in an alternative embodiment of the invention.

Figure 8 is a side view of the recreational vehicle illustrating a further alternative embodiment of the invention.

Figure 9 is a top view of the alternative embodiment of the invention of Figure 8.

Figure 10 is a close up perspective view of the recreational vehicle of Figure 1 illustrating the inter-relationship between the drive means and the gliding means in a preferred embodiment of the invention.

Figure 11 is a front view of the instant invention with an operator seated thereon illustrating the technique used for turning in a given direction D1 in a preferred embodiment of the invention.

Figure 12 is a front view of the instant invention as illustrated in Figure 11 depicting a turn in the opposite direction D2 to that of Figure 11 in a preferred embodiment of the invention.

Figure 13 is a perspective view of the instant invention in an alternative embodiment of the invention.


## DETAILED DESCRIPTION OF THE PREFERRED EMBODIMENTS OF THE INVENTION


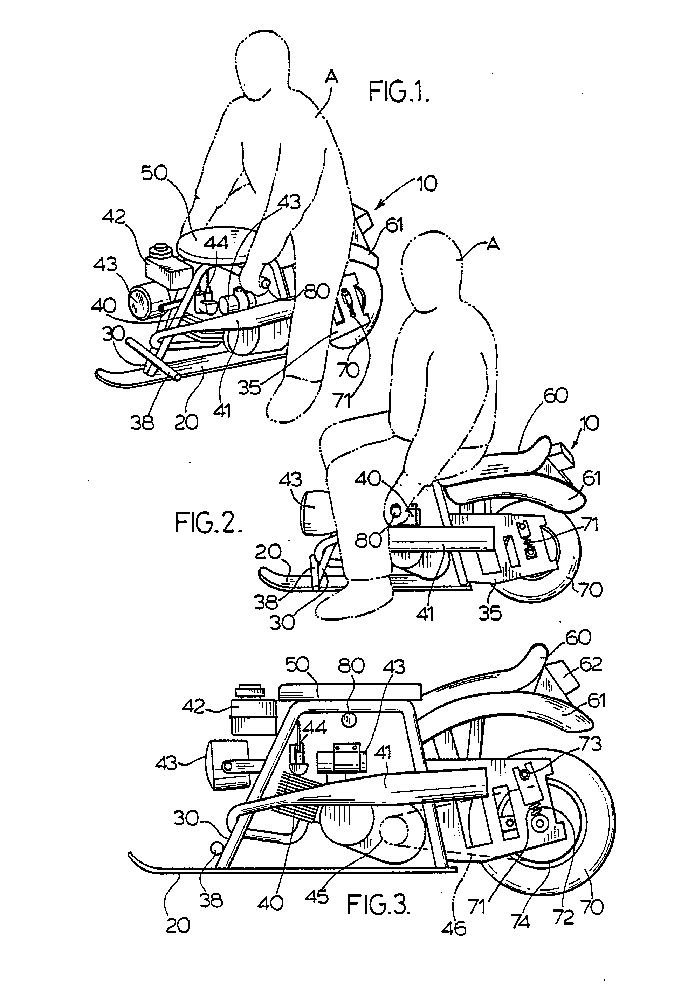

Referring now to Figure 1, recreational vehicle 10 is illustrated in perspective having an operator A seated on the top thereof grasping handle means 80 located underneath molded seat 50. The recreational vehicle has a ski 20 at the bottom being interconnected with the seat 50 by tubular frame 30. At the rear of recreational vehicle 10 is located a wheel 70 attached to the frame 30 by shock absorber 71. The shock absorber 71 is adjustable in position. Internal combustion engine 40 is located under seat 50 having all of the necessary components to drive the wheel 70 of the recreational vehicle 10. Further light 43 is provided for night use, and a gas tank 42 is provided for fuel source. A footbar 38 is provided forwardly mounted upon frame 30 near the ski 20 to provide a footrest for the operator A once the vehicle is in motion.

Referring now to Figure 2 operator A is shown seated upon the forward seat 50 of Figure 1, and clearly illustrating the rearward seat 60 upon which the operator A was sitting as illustrated in Figure 1. Such an alternative seating position is dependent upon the comfort of the operator A at each seat 50 or 60. The feet of the operator A are touching the ground similar to the resting position of a motorcycle and once speed is attained the feet may be raised and located on footbar 38. The second seat 60 may be used by a second rider depending on the dimensions of the design of the invention utilized.

Referring now to Figure 3 the recreational vehicle is shown from the side illustrating in closer detail the components of the recreational vehicle 10. The internal combustion engine 40 has a spark plug 44 on the top thereof and an exhaust manifold 41 extending from the bottom of the engine 40 and moving toward the rear of the recreational vehicle. As would be expected with any internal combustion engine a coil 43 is provided. Drive pulleys are provided and specifically drive pulley 45 providing the motivation means for chain 46 to drive driven pulley 74 upon wheel 70. It is understood of course that any drive means may be used whether it be electric, gas, diesel, or a manual bicycle pedal type drive means. However, the preferred embodiment is illustrated with a gasoline engine because of the economies involved with the fuel, the ease of acquiring the fuel, and the economies of scale provided by such a unit.

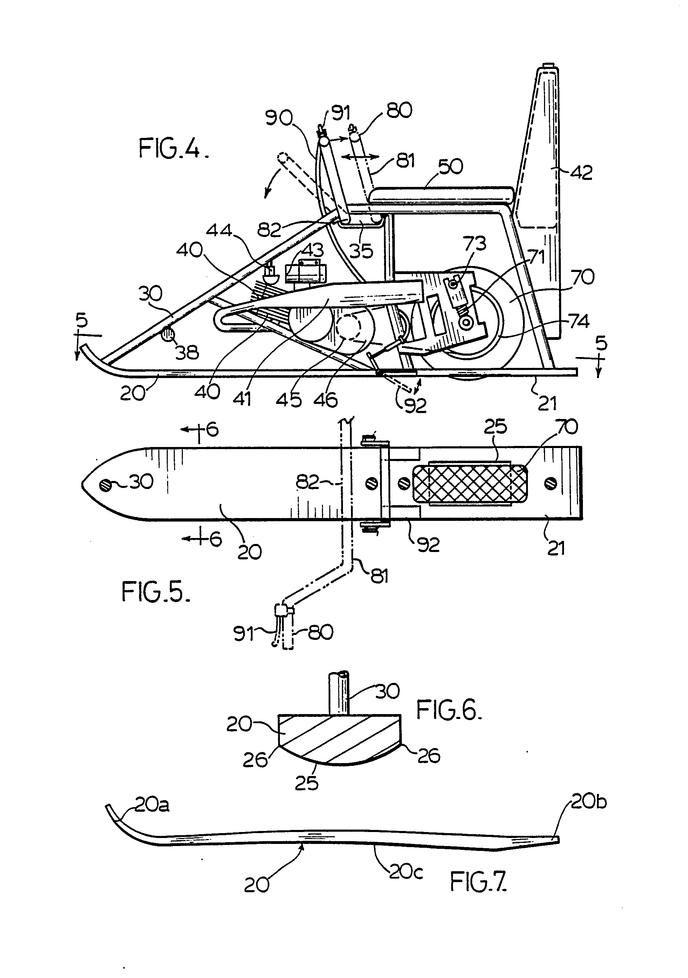

Referring now to Figure 4 an alternative embodiment of the recreational vehicle is illustrated. It is of course understood that more than one alternative embodiment exists and the Applicant is merely attempting to describe those which are most advantageous when embodying the instant invention. Therefore, in Figure 4 the recreational vehicle 10 is illustrated in side view having a ski 20 which extends the full length of the recreational vehicle unlike the ski of Figure 3 wherein the ski extends rearwardly only to just short of the forward portion of wheel 7. In Figure 4, however, the ski 20 extends the full length of the recreational vehicle. The handle means 80 is illustrated connected to frame 30 below seat 50 wherein secondary seat 60 has been eliminated in this embodiment. The handle means 80 are adjustable horizontally within slot 35 of frame 30 and vertically by the rotation thereof and the positioning thereof. Thus, it may be seen from Figure 4 that the handle means 80 may be adjusted to and suitably located for the comfort and preference of riding style by the operator A. Wheel 70, further, passes through a slot within ski 20 proximate the rear thereof as best illustrated in Figure 5.

Referring now to Figure 5 a top view of the recreational vehicle of Figure 4 is illustrated showing the handle means 80 having a brake caliper 91 attached to a typical bowden cable 90 which extends down to plates 92 positioned within the circumference of but on the lateral sides of ski 20 forward of wheel 70. By squeezing the caliper 91 cable 90 will cause plates 92 to pivot downwardly away from the ski 20 and provide thereat braking action for the recreational vehicle 10. Further, ski 20 is illustrated in this embodiment being of extra width and thereby providing more stability for the operator A. The handle means 80 may be pivoted and adjusted to a convenient position as required by the operator A.

Referring now to Figure 6 the ski of Figure 5 is illustrated in cross-section cross the line AA of Figure 5. The arcuate curved portion upon the bottom of the ski 25 provides the operator A with greater control while operating the recreational vehicle. Sharp edges 26 exist on each side of the ski providing extra digging power at the edges thereof for frictional engagement with the snow being traversed. The action described is very similar to that of a skier having sharp edges thus providing improved control of the recreational vehicle.

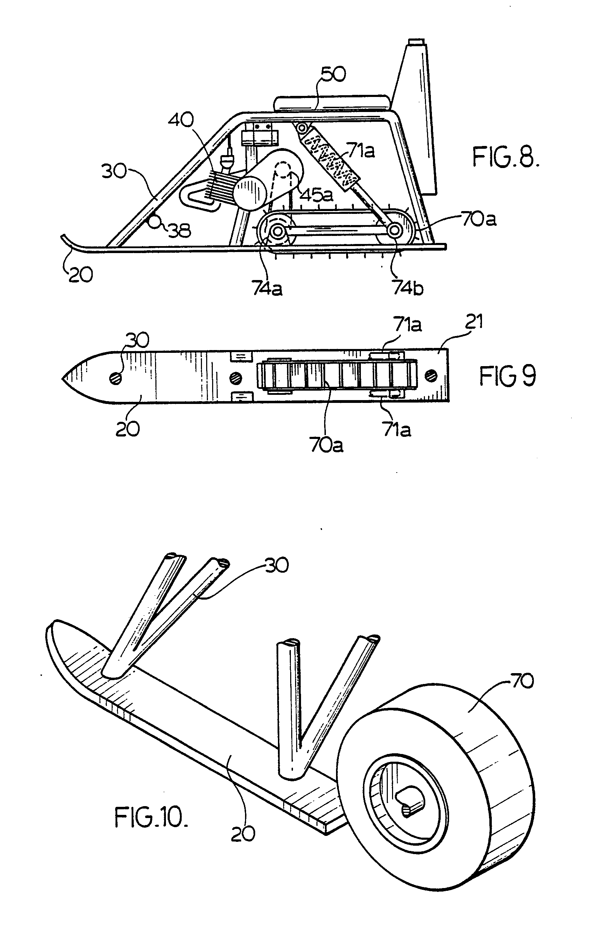

Referring now to Figure 7 wherein a side view of the ski 20 is illustrated in an alternative embodiment of the invention. The ski 20 is illustrated being bowed from front 20A to rear 20B whereby in use the arcuate portion 20C will rest upon the terrain being traversed being deflected toward the terrain by the weight of the recreational vehicle plus the operator. Thus, the ski of Figure 7 will provide more uniform distribution of the weight of the operator and the recreational vehicle over the total length of the ski 20.

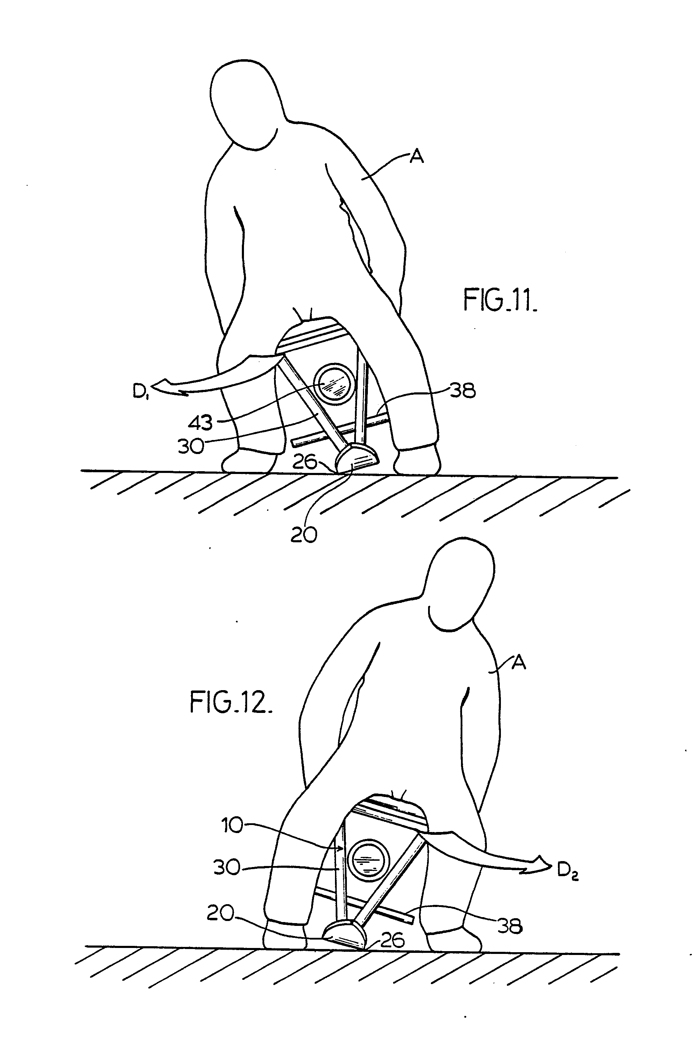

Referring now to Figure 8 an alternative embodiment of the invention is illustrated in side view having all of the components described in relation to Figure 4 with the exception of the wheel 70 being replaced by a continuous track 70A and pulley 74 being replaced by pulley 74A. Further, the drive pulley 45 have been relocated to best suit this alternative embodiment at 45A. Referring to Figure 9 which is identical to Figure 5 with the exception of the use of track 70A as the driven means, all other features thereof being the same, namely, a slot 25 extending through the ski 20 allowing track means 70A to pass through the slot to the terrain being traversed.

Referring now to Figure 10, the ski of Figure 1 is illustrated and its relationship to the wheel 70. Thus, it can be seen from Figure 10 that regardless of the direction in which the recreational vehicle is travelling the ski and the wheel always remain in colinear relationship with one another. The same would be true with reference to the alternative embodiment described in Figures 8 and 9, or Figures 4 and 5. Such a colinear relationship provides for better control of the recreational vehicle upon the terrain being traversed in that there is never the danger of the ski and the driven means 70 not being colinear and thus causing an edge to catch or the flipping of the vehicle.

Referring now to Figures 11 and 12 wherein an operator A is riding the recreational vehicle 10 and leaning in the direction in which he/she wishes to turn. By leaning in a direction illustrated edge or the respective edge 26 engages the terrain being traversed T and thus causes the vehicle and the operator to turn in direction D1 or D2 respectively. Such a turning action is very similar to that of a skier placing his/her weight on the outside or inside edge of the ski depending on which direction he/she wishes to turn. Exactly the same procedure is used in turning the recreational vehicle. However, unlike the conventional recreational vehicles having a steering column the reaction of the operator is much quicker in operation of the instant invention in that he/she merely needs to shift his/her weight to one side or the other to turn the vehicle. If the operator wishes to brake he/she merely turns in the direction he/she wishes to brake as a figure skater would do. At the same time of course the operator would let go of the throttle. Again the wheel or driven means would never be out of colinear relationship with the ski 20 and thus the risk of upsetting the instant invention is minimal. The reaction and control of the operator A is further improved by such a device.

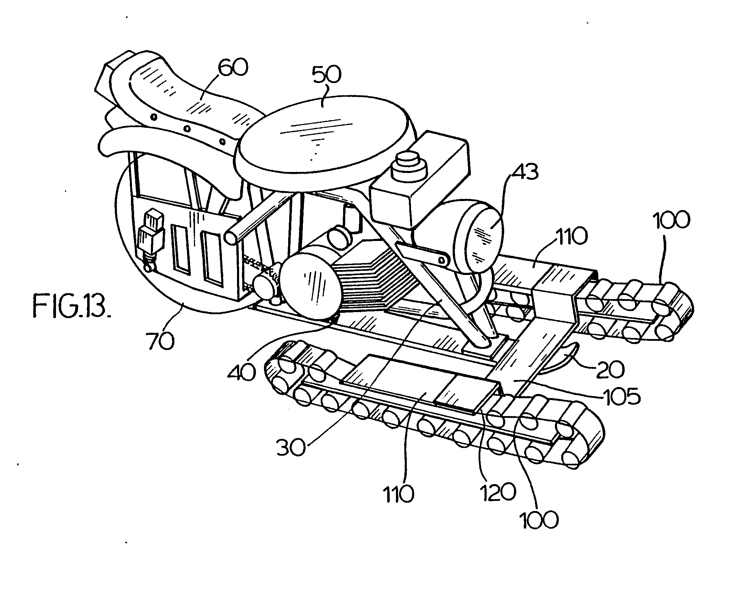

Referring now to Figure 13 wherein recreational vehicle 10 is illustrated in perspective being used on grass covered terrain having located at the front thereof upon the ski 20 a frame 105 extending laterally away from the side edges of the ski 20. Attached to the frame 105 at the extreme sides thereof are continuous belts 100 having upon the tops thereof brake pedals 110 underneath which the continuous belt on each side will travel. The operator may therefore press upon brake pedal 110 causing the belt to either slow or stop its rotation and thereby allowing the recreational vehicle to turn in that direction. This of course is very similar to the function of a track vehicle such as a military tank. If the operator chooses to push on both pedals at the same time the recreational vehicle may be slowed or braked. Such a device as illustrated in Figure 13 may be used as an alternative embodiment of the invention when the invention is used by those individuals who are less agile but still enjoy the fun and excitement of using the recreational vehicle.

The recreational vehicle of the instant invention may be powered and alternatively embodied to traverse both snow or grass by the alternatives presented in Figures 1 through 13. In all cases the recreational vehicle is steerable by the transferring the weight of the operator A from side to side. No steering column is provided although handle means are provided which are adjustable in position against which the operator A may secure or brace himself during a turn or operation of the recreational vehicle 10. Of course it is understood that the recreational vehicle 10 may be used to traverse flat, sloped or hilly terrain. By providing a compact light weight design in the preferred and alternative embodiments the instant invention may be used by anyone. The fear of falling is negated by such a compact design, and further by the basic design of the recreational vehicle in that the wheel 70 remains colinear with the ski 20 at all times unlike other steerable recreational vehicles. As illustrated best in figure 2 the operator is in close communication with the ground or terrain being traversed at all times and thus if he wishes to stop in an emergency may do so quickly and efficiently.

The recreational vehicle although light weight will provide the operator with fun and excitement in that the drive means in the preferred embodiment being a gasoline engine will propel the recreational vehicle at up to 40 kilometres an hour safely and effectively. When the operator wishes to stop he/she stops as if he/she were skating, that is turning to one side or the other while disengaging the throttle. The recreational vehicle may be built from sturdy materials and may weigh as much as 100 pounds but may be as light weight as a fabricator may wish to provide. A weight of 40 pounds is considered to be optimum.

It is understood that the fuel tank may be located at any convenient location, for example, the fuel tank may be located as illustrated in Figure 4 at the back of seat 50 upon a back brace at 42. Further, the fuel tank may be provided below or incorporated as part of the frame of seat structure 50.

The instant invention provides a tight turning capacity for the operator A and may be used during both the summer and winter seasons working equally well over grass covered, snow covered, or ice covered terrain. Further, by incorporating such a simple design to practical assembly line technology the economies of scale of the unit will be such that it will be accessible to just about anyone's pocket book.

As many changes can be made to the preferred embodiments of the invention without departing from the scope of the invention, it is intended that all matter contained herein be interpreted as illustrative of the invention and not in a limiting sense.

## Claims

1. A recreational vehicle having a bottom for use upon grass or snow covered terrain comprising fixed means located upon the bottom of the vehicle for gliding across terrain; means for seating an operator upon the fixed gliding means; means for interconnecting the operator seating means with the fixed gliding means; handle means extending from the operator seating means or the interconnecting means; driving means fastened to the recreational vehicle; driven means in communication with and driven by the driving means for frictional engagement with the traversed terrain, the driven means being suitably fastened to the body of the recreational vehicle; whereby the vehicle is steerable and stoppable by the lateral shifting of the weight of the operator to one side of the vehicle by leaning in that direction.

2. The recreational vehicle of Claim 1, wherein the handle means are adjustable in position horizontally and vertically.

3. The recreational vehicle of Claim 1 or 2, wherein the seating means is at least one moulded seat.

4. The recreational vehicle of any preceding Claim, wherein the interconnecting means is a tubular frame.

5. The recreational vehicle of any preceding Claim, wherein the driven means is suitably fastened to either the interconnecting means or the fixed gliding means.

6. The recreational vehicle of any preceding Claim, wherein the driven means is a wheel.

7. The recreational vehicle of Claim 6, wherein the driven means is a tire having chains about its perimeter for improving traction thereof.

8. The recreational vehicle of any one of Claims 1 to 5, wherein the driven means is a continuous track.

9. The recreational vehicle of Claim 8, wherein the driven means comprises a continuous belt fastened to the end of the fixed gliding means proximate the driven means and vertically pivotable thereat.

10. The recreational vehicle of Claim 8 or 9, comprising a continuous belt mounted on the underside of the fixed gliding means, the endless belt having a plurality of rollers mounted thereon and adapted to engage and roll on the ground.

11. The recreational vehicle of any preceding Claim, comprising support struts forwardly and rearwardly acting as both shock absorbers and tensioning devices which in combination with the weight of the operator and vehicle ensure traction between the driven means and the terrain.

12. The recreational vehicle of any preceding Claim, comprising fixed gliding means having remotably actuatably pivotable plates extending from the end of the fixed gliding means proximate the driven means, the plate being pivotable downwardly away from the fixed gliding means to provide braking action between the vehicle and the terrain being traversed.

13. The recreational vehicle of any preceding Claim, wherein the fixed gliding means comprises a ski being longitudinally bowed in construction away from the traversed terrain, whereby in use the weight of the vehicle and the operator are more uniformly distributed over the entire length of the ski.

14. The recreational vehicle of any preceding Claim, wherein the driving means is a gasoline motor.

15. The recreational vehicle of any preceding Claim, wherein the fixed gliding means is a ski and has fastened thereto remote the driven means, a frame extending laterally away from the fixed gliding means on both sides thereof, the frame having fastened at the extremes thereof at least one continuous belt, at least one on each side in communication with the terrain for assistance in steering and braking the vehicle over grass covered terrain, the frame comprising plates extending horizontally above the continuous belt and defining a channel in which the continuous belt may travel, the plates being deflectable downwardly upon pressure of an operator's foot thereby interfering with the rotation of the continuous belt and slowing or stopping the selected belt.

16. The recreational vehicle of any preceding Claim, wherein the fixed gliding means is a ski having sharp edges, the ski having an arcuate bottom along the entire length of the ski separating its edges, the sharp edges providing enhanced control of the recreational vehicle.

17. The recreational vehicle of any preceding Claim, wherein the driving means is located substantially below the operator seating means.

18. The recreational vehicle of any preceding Claim, comprising fixed gliding means being a ski extending substantially the full length of the vehicle and having an opening therethrough through which the driven means may extend to contact the terrain being traversed.

FIG.1.

FIG.2.

FIG.3.

FIG.4.

FIG.5.

FIG.6.

FIG.7.

50

40

30

71a

FIG.8.

45a

38

70a

20

74a

74b

30

71a

21

FIG 9

20

70a

71a

30

FIG.10.

70

20

FIG.11.

D₁

43

30

26

20

38

A

FIG.12.

10

30

20

26

38

A

D₂

FIG.13.

0 290 185